# EUROPÄISCHE PATENTANMELDUNG

(11) **EP 0 862 150 A2**
(43) Veröffentlichungstag der Anmeldung: **02.09.1998**
(21) Anmeldenummer: 97122899.4
(22) Anmeldetag: 24.12.1997
(51) Int. Cl.: G07F 9/02, G06F 17/60

(54) **Verkaufsautomat mit an die Nachfrage angepassten Preisen**

(30) Priorität: 12.02.1997 DE 19705245
(71) Anmelder: International Business Machines Corporation, Armonk, N.Y. 10504 (US)
(72) Erfinder: Dueck, Gunter, Prof., 69151 Neckargemünd (DE); Wallmeier, Hans-Martin, Dr., 69181 Leimen (DE); Jäger, Jürgen, 51375 Leverkusen (DE); Stamm-Wilbrandt, Hermann, 69239 Neckarsteinach (DE)
(74) Vertreter: Teufel, Fritz, Dipl.-Phys.

(57) **Zusammenfassung**

Beschrieben wird ein elektronischer Auktionsautomat, der auf sich ändernde Absatzverhältnisse hin mit entsprechend angepaßten Automatenpreisen reagiert. Bei bekannten Verkaufsautomaten beruhen Nachbestückungen auf sehr vagen Erfahrungswertenn. Insbesondere werden übliche Absatzschwankungen nicht berücksichtigt. Bei dem vorgeschlagenen Automaten werden mittels einer Datenverarbeitung aktuelle Marktdaten erfaßt (31) und basierend auf diesen Daten die aktuelle Marktsituation automatisch bewertet (32, 34). Ein entsprechend aktualisierter Automatenpreis (33, 35) wird dann neu angezeigt.

## Beschreibung

Die Erfindung betrifft ein Verfahren und eine Vorrichtung zur automatischen marktgerechten Preisanpassung bei Verkaufsautomaten, in denen ein begrenzter Bestand an Waren oder Dienstleistungen zum Verkauf angeboten wird.

Bekannte Verkaufsautomaten der vorgenannten Gattung, in denen z.B. Verzehrgüter wie Nahrungsmittel oder Blumen zum Verkauf angeboten werden, sind im allgemeinen relativ starken Nachfrage- und Absatzschwankungen unterworfen. Darüber hinaus führen Wetteränderungen, Urlaubsrhythmen, oder in der näheren örtlichen Umgebung dieser Automaten unregelmäßig stattfindende Veranstaltungen häufig zu Verkaufs- oder Bestandsverlusten der angebotenen Ware, beispielsweise durch Verderb. In einigen Fällen kommt es sogar vor, daß die Automaten bis zu einem nächsten Bestückungstermin völlig ausverkauft sind.

Die erforderlichen Nachbestückungen einzelner Waren oder des gesamten angebotenen Warenbestandes werden in regelmäßigen festen Zeitintervallen vorgenommen. Für die Bemessung der genauen Stückzahlen bei diesen Nachlieferungen werden meist Erfahrungswerte zugrundegelegt, wobei insbesondere die relativen Bestückungszahlen der unterschiedlichen angebotenen Waren untereinander von besonderer Bedeutung sein können.

Ein besonderer Nachteil der vorgenannten Verkaufsautomaten ist nun, daß die Nachbestückungen lediglich auf sehr vagen Erfahrungswerten beruhend erfolgen können. Insbesondere können die oben angesprochenen Absatzschwankungen keine Berücksichtigung finden. Der einzige Weg, um bei bekannten Automaten jederzeit eine optimale Auslastung zu gewährleisten, ist eine häufige und regelmäßige Überwachung jedes der Automaten, um deren jeweilige Bestückungssituation zu überprüfen, und um gegebenfalls eher oder erst später eine Nachbefüllung vorzunehmen.

Auch im Bereich reiner Dienstleistungsangebote treten die vorgenannten Probleme zutage. So kann bei selbständigen oder vernetzten Informationsständen (Informationskioske) daran gedacht werden, etwa anfallende Nutzungsgebühren mit der jeweiligen Tageszeit zu skalieren, um den im Tagesverlauf sich ändernden Betriebskosten für das Gerät selbst oder das zugrundeliegende Kommunikationsnetz besser gerecht zu werden. Einen anderen Bereich stellt der Online-Verkauf von Eintrittskarten jeglicher Art dar. Solche Geschäfte lassen sich bereits heute über Online-Dienste abwickeln, und in Zukunft zunehmend auch bei den vorgenannten Informationsständen.

Der vorliegenden Erfindung liegt somit die Aufgabe zugrunde, einen gattungsgemäßen Verkaufsautomaten dahingehend zu verbessern, daß er Preisanpassungen aufgrund einer aktuellen Angebots-/Nachfragesituation selbsttätig, d.h. ohne erforderliche Eingriffe von außen durch den Betreiber, vornimmt.

Diese Aufgabe wird bei der Erfindung dadurch gelöst, daß mittels einer Datenverarbeitung aktuelle Marktdaten, z.B. die aktuelle Tageszeit oder der derzeitige Bestand im Automaten für eine bestimmte Ware oder Dienstleistung, oder sämtliche der angebotenen Güter bzw. Dienstleistungen, im Automaten erfaßt werden. Basierend auf diesen Daten wird dann die aktuelle Marktsituation automatisch bewertet, und daraufhin ein entsprechend gültiger bzw. aktualisierter Automatenpreis elektronisch neu angezeigt.

Bei früh drohendem Ausverkauf kann somit der Preis eines Verkaufsgutes erhöht, bei schleppendem Absatz gesenkt werden. In einem weiteren Ausführungsbeispiel ist eine besondere Anzeige, beispielsweise in Form eines "Sonderangebotes", vorgesehen, die insbesondere im Falle eines schleppenden Absatzes aktiviert wird. Insgesamt arbeitet der vorgeschlagene Automat wie ein elektronischer Auktionator.

Es wird hervorgehoben, daß die grundlegenden Konzepte der vorliegenden Erfindung - über die eingangs umschriebenen selbständig operierenden Verkaufsautomaten hinaus - auch in anderen Bereichen der Verkaufs- bzw. Absatzplanung anwendbar ist, in denen das Absatzverhalten von schwer vorhersehbaren äußeren Bedingungen, wie z.B. das Wetter, abhängig ist, und in denen eine laufende Preisanpassung (Auktionsgeschäft) an die sich ändernden Bedingungen möglich ist.

Im folgenden Teil wird die Erfindung anhand von Ausführungsbeispielen und unter Bezugnahme auf die Zeichungen näher erläutert. Im einzelnen zeigen
Fig. 1a, b Absatzkurven (Befüllungskapazität über Zeit) eines Verkaufsautomaten nach dem Stand der Technik;
Fig. 2 eine Ideal-Absatzlinie eines Verkaufsautomaten entsprechend der Erfindung;
Fig. 3 das Beispiel einer Ideal-Absatzkurve zusammen mit einer aktuell ermittelten Absatzkurve (gestrichelte Linie) entsprechend der Erfindung;
Fig. 4 eine umfassende Umschalttabelle mit Absatzdaten gemäß einem besonderen Ausführungsbeispiel der Erfindung;
Fig. 5 erfindungsgemäße Verfahrensschritte zur Anpassung von Preisen anhand eines Flußdiagramms; sowie
Fig. 6 den prinzipiellen Aufbau einer elektronischen Schaltung zur Realisierung der erfindungsgemäßen Preisanpassung.

Der Erfindung liegt das Konzept zugrunde, durch Angabe geeigneter Absatzprognose-Regeln eine Preisfindung zu definieren und diese in einem gattungsgemäßen Verkaufsautomaten technisch entsprechend umzusetzen. Durch Erfassung von Meßgrößen, die die Absatzsituation des Automaten widerspiegeln, wird eine Einschätzung ermöglicht, ob die Absatzlage besser als erwartet, schlechter als erwartet, oder normal ist. Derartige Kenngrößen für die Absatzerwartung können sein:
- Art des Tages (Arbeitstag, Sonntag, Feiertag)
- Tageszeit
- Lage des Tages im Jahr (Sommer, Winter)
- Feiertagsnähe (Weihnachten, Ostern, Valentinstag, Muttertag)
- Absatzmenge nach der letzten Befüllung sowie ihr Verhältnis zur normalen Absatzmenge bis zum betrachteten Zeitpunkt.

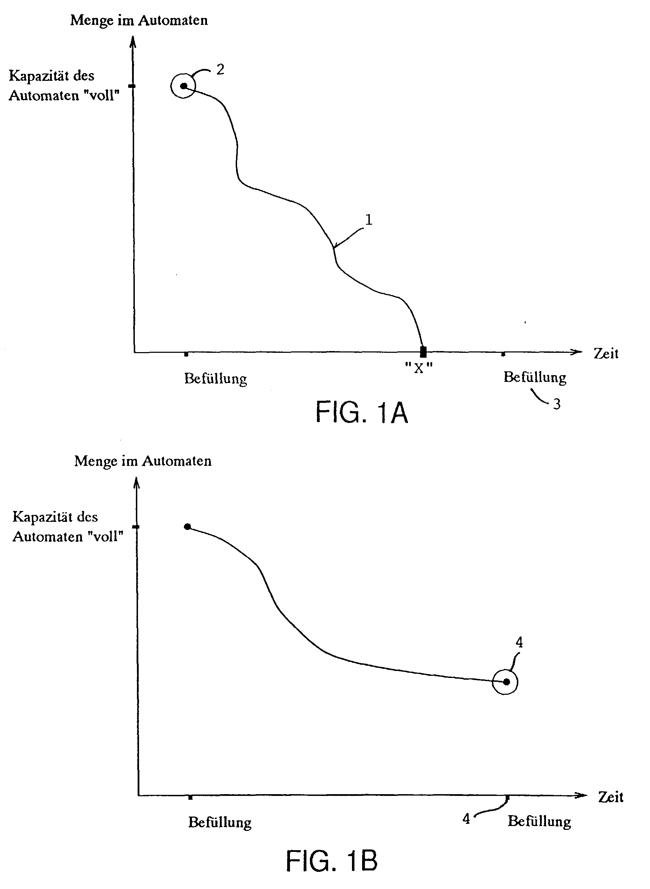

In Abhängigkeit von diesen Absatzfaktoren verläuft der Absatz in derartigen Automaten zwischen zwei Befüllungszeitpunkten im allgemeinen sehr unterschiedlich. Dieser Zusammenhang wird nun anhand der Figuren 1a und b näher verdeutlicht. Hierbei werden Absatzverläufe in einem Diagramm "Menge der angebotenen Ware oder Dienstleistung (Kapazität) über Zeit" dargestellt.

In Fig. 1a ist eine Absatzsituation anhand einer Absatzkurve 1 dargestellt, bei der ein Verkaufsautomat zum Befüllungszeitpunkt 2 eine volle Kapazität aufgewiesen hatte und ein relativ zügiger Absatz erfolgt ist. Zum Zeitpunkt x, der vor dem nächsten Befüllungstermin 3 liegt, ist der Automat deshalb bereits ausverkauft. Diese Situation hätte dadurch vermieden werden können, wenn man entweder den bevorstehenden Befüllungstermin vorverlegt hätte oder aber die Ware bzw. Dienstleistung bereits im Vorfeld zu einem höheren Preis (Auktionsprinzip) abgesetzt hätte. Jedenfalls führt diese Situation dazu, daß Automatenkundschaft verärgert ist, da sie einen leeren Automaten nach dem Zeitpunkt x vorfindet.

Im Gegensatz dazu ist in Fig. 1b eine Situation dargestellt, in der ein Automat zum Zeitpunkt 4 einer neuen Befüllung noch teilweise voll ist. Daher hätte die Ware zu einem niedrigeren Preis zügiger abgesetzt werden können. Demnach ist dem Automatenbetreiber Geschäft entgangen. Darüber hinaus ist bei verderblichen Gütern wie belegten Brötchen oder Blumen sogar ein Verlust entstanden, da die Ware verdorben und somit unverkäuflich geworden ist.

Gegenüber diesen Nachteilen ist es Ziel der Erfindung, einen Preisfindungsmechanismus anzugeben, mittels dessen ein solcher Verkaufsautomat in die Lage gesetzt wird, völlig autonom Absatzkurven zu erzeugen, die zu einem Ausverkauf des Automaten möglichst genau zum neuen Befüllungszeitpunkt führen. Gemäß der Erfindung sind dafür verschiedenartige Tabellen in dem Automaten vorgesehen, nach denen Preisumschaltungen vorgenommen werden.

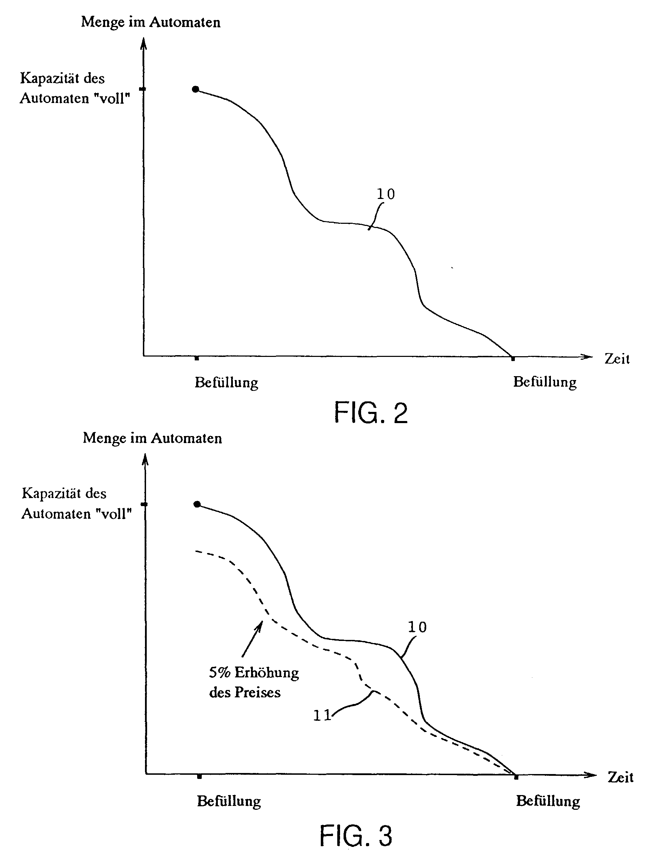

In einem ersten Schritt werden dem Automaten Ideal-Absatzlinien - entsprechend der in Fig. 2 gezeigten Kurve 10 - eingegeben, die als Grundlage für die Steuerung dienen. Hierbei ist es vorteilhaft, unterschiedliche Ideallinien zu verwenden, und zwar entsprechend verschiedenen Befüllungszeiträumen (Tagestypen) an Sonn- und Feiertagen, für Sommer- oder Wintertage, usw. Abweichungen von diesen Ideallinien begegnet der Automat mit Preisanpassungen, wie im folgenden näher erläutert wird.

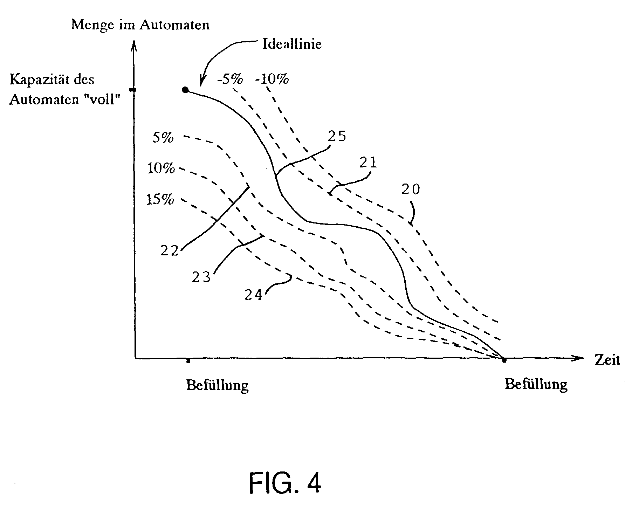

Mit dem in Fig. 3 gezeigten Schema können nun bei Abweichungen von der jeweiligen Ideallinie 10 Preise umgeschaltet werden. Die durchgezogene Linie 10 kennzeichnet eine ideale Absatzkurve, die gestrichelte Linie 11 eine aktuelle Bestandssituation. Ab einem gewissen Grad der Abweichung von der Ideallinie, die durch eine Schwelle charakterisiert sein kann, wird der Preis beispielsweise um 5% erhöht. Eine vollständige Umschalttabelle unter Berücksichtigung einer Anzahl verschiedener Umschalt-Bandbreiten 20-24 um eine Ideallinie 25 ist in Fig. 4 gezeigt.

Für jeden Tagestyp werden verschiedene solcher Tabellen aus statistischen Erhebungen ermittelt und in einer Datenbank niedergelegt. Besonders vorteilhaft ist eine Implementierung der Datenbank in einem EEPROM (electronically erasable read only memory), was eine einfachere Anpassung der Tabellen in einem rückgekoppelten Prozess erlaubt. Der Detaillierungsgrad der Datenbank (Anzahl der Tabellen pro Tagestyp, z.B. tageszeitabhängig, oder Anzahl der Kurven pro Tabelle) wird nach Bedarf bestimmt.

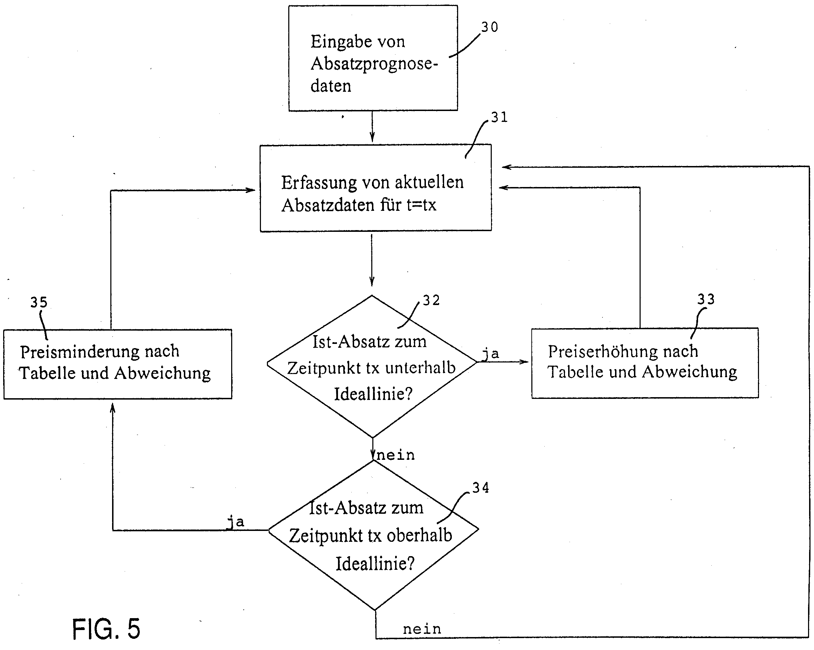

Anhand des in Fig. 5 dargestellten Flußdiagramms wird nun ein Ausführungsbeispiel des erfindungsgemäßen Verfahrens zur Anpassung der jeweiligen Automatenpreise näher erläutert. Die Ermittlung der Automatenpreise basiert zunächst auf geschätzten Absatzprognosedaten 30, die in einer Datenbank in Form der vorbeschriebenen Umschalttabellen abgelegt sind. Hierbei können - wie bereits diskutiert wurde - mehrere Umschalttabellen vorgesehen sein, die jeweils unterschiedlichen äußeren Bedingungen angepaßt sind. Diese Bedingungen können mit Hilfe von Licht- und/oder Temperatursensoren (Wetterverhältnisse) und/oder Zeitgebern (Tag/Nacht) erfaßt werden.

In dem Beispiel werden nun zum betrachteten Zeitpunkt tx die aktuellen Absatzdaten (Ist-Werte der Waren- und/oder Dienstleistungsbestände) mittels gebräuchlicher mechanischer und/oder elektronischer Vorrichtungen erfaßt 31 und mit den oben genannten Absatzprognosedaten verglichen. Für den Fall, daß die aktuellen Absatzwerte zum betrachteten Zeitpunkt unterhalb der prognostizierten Werte zu liegen kommen 32, und mit anderen Worten ein Ausverkauf für mindestens eine der angebotenen Waren/Dienstleistungen droht, werden die jeweiligen Automatenpreise gemäß den Umschalttabellenwerten und entsprechend den jeweiligen Abweichungen von der Idealkurve erhöht 33. Danach werden zu einem festlegbaren späteren Zeitpunkt erneut aktuelle Absatzdaten ermittelt und entsprechend verarbeitet. Falls die Absatzwerte innerhalb einer vorgebaren Toleranz innerhalb der Ideallinie liegen, werden die bestehenden Automatenpreise beibehalten und zu einem späteren Zeitpunkt ein erneuter Vergleich 32 unternommen.

Liegen jedoch die aktuellen Absatzwerte nicht unterhalb der Ideallinie, wird in einem nächsten Schritt geprüft, ob die Absatzwerte oberhalb der Ideallinie liegen 34. Sollte dies der fall sein, werden die Automatenpreise entsprechend der jeweiligen Abweichung von der Idealkurve abgesenkt 35.

Bei der Preisanpassung sind demnach folgende Schritte zu durchlaufen:
- abhängig von Informationen über Tageszeit, Tagestyp und das Wetter, die in einem Pufferspeicher zwischengespeichert werden, wird die zu verwendende Umschalttabelle für jedes Produkt aus der Datenbank geladen;
- für jedes Produkt wird der "Ist"-Absatz mit den in der Tabelle niedergelegten Bandbreiten unter Berücksichtigung des nächsten Befüllungstermins verglichen;
- hieraus wird die "nächste" Kurve ermittelt;
- der Preis wird dann gemäß der jeweiligen Bandbreite angepaßt.

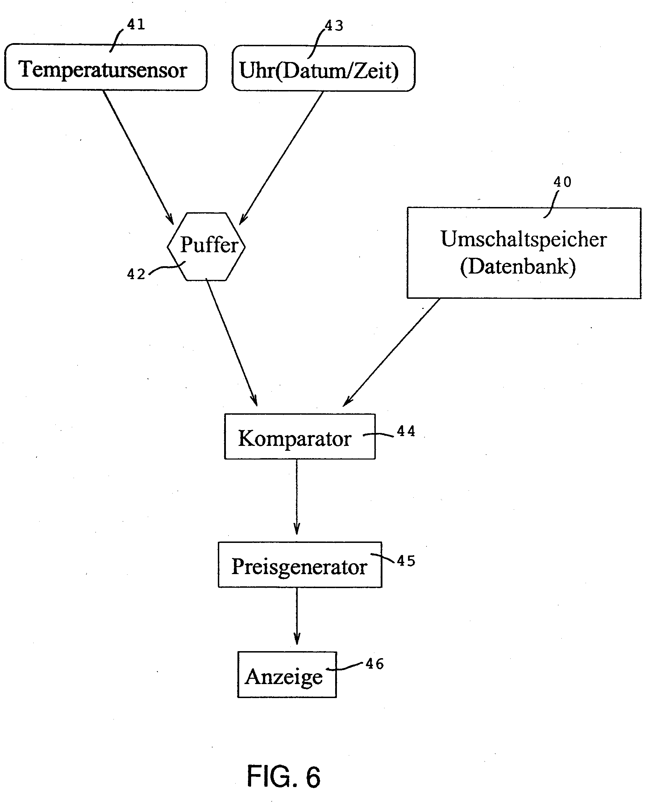

Alternativ zu den vorbeschriebenen Schalttabellen, die als in dem Automaten implementierte Steuerungsprogramme realisiert werden können, wird im folgenden die Implementierung der Erfindung in Form einer elektronischen Schaltung anhand der in Fig. 6 gezeigten Prinzipzeichnung aufgezeigt. Dabei ist - wie oben bereits ausgeführt - der Umschalttabellenspeicher 40 zur Realisierung der Datenbank als EEPROM ausgestaltet.

Über einen oder mehrere Sensoren 41 werden in dem Ausführungsbeispiel Wetterinformationen, Tageszeit, und/oder Datum (Tagestyp), mit Hinblick auf eine geeignete Preisfindung erfaßt und in einen Puffer 42 zwischengespeichert. Darüber hinaus kann als Grundlage für die am Automaten herrschenden äußeren Bedingungen mittels eines Zeitgebers 43 die Uhrzeit und/oder das jeweilige Datum erfaßt werden. Entsprechend werden jeweils ermittelte aktuelle Absatzdaten (Ist-Absatz) zwischengespeichert (hier nicht gezeigt).

Die in dem Umschaltspeicher gespeicherten Tabellen werden zunächst mittels eines Komparators 44 mit den die äußeren Bedingungen darstellenden Daten verglichen und gemäß dem Vergleichsergebnis eine entsprechende, diese Bedingungen repräsentierende Tabelle zugrundegelegt. Weiterhin werden mittels des Komparators 44, oder eines hier nicht gezeigten weiteren Komparators, die aktuellen Absatzdaten mit den in der jweiligen Tabelle enthaltenen Daten verglichen und das Ergebnis an eine Preisgenerator 45 übergeben. Der Preisgenerator nun generiert einen entsprechend angepaßten Neupreis für eine oder mehrere der angebotenen Waren/Dienstleistungen, der schließlich über eine Anzeige 46 z.B. visuell dargestellt wird.

Mittels der vorbeschriebenen Schaltung wird ein derartiger Verkaufsautomat in die Lage gesetzt, entsprechend dem obigen Konzept geänderte Automatenpreise völlig autonom zu generieren und diese mit Hilfe üblicher Anzeigemittel anzuzeigen.

Alternative Ausführungsformen zu der oben beschriebenen Schaltung sind beispielsweise "Fuzzy-Logic"-Systeme, Expertensysteme oder neuronale Netze, in denen die Ideallinien für bestimmte äußere Bedingungen im laufenden Betrieb gelernt und optimiert werden.

## Patentansprüche

1. Verfahren zur automatischen, selbstadaptiven Absatzsteuerung in einem Verkaufsautomaten, in dem eine Menge von Waren und/oder Dienstleitungen zu jeweils bestimmten Automatenpreisen angeboten werden, gekennzeichnet durch die folgenden Verfahrensschritte:
Bereitstellen (30) von auf Absatzerwartungen basierenden Absatzprognosedaten;
Erfassen (31) aktueller Absatzdaten;
Anpassen (33, 35) mindestens eines Automatenpreises in bezug auf die Abweichung der aktuellen Absatzdaten von den Absatzprognosedaten;
Anzeigen (46) eines entsprechend angepaßten Automatenpreises.

2. Verfahren nach Anspruch 1, dadurch gekennzeichnet, daß die Absatzerwartung nach Kenngrößen (41, 43) für außerhalb des Verkaufsautomaten bestehenden Bedingungen bestimmt wird.

3. Verfahren nach Anspruch 2, dadurch gekennzeichnet, daß die Absatzprognosedaten durch mindestens einen Datensatz (40) repräsentiert werden, der mindestens eine Idealkurve sowie eine zugeordnete Umschaltbandbreite aufweist, die einen Schwellenwert für das Umschalten zwischen den Automatenpreisen definiert.

4. Verfahren nach Anspruch 3, dadurch gekennzeichnet, daß mindestens zwei Datensätze (Umschalttabellen) für die Absatzprognose verwendet werden, die jeweils mit mindestens einer Kenngröße korrelierenden äußeren Bedingungen erfaßt werden, wobei zwischen den Datensätzen entsprechend den erfaßten Bedingungen umgeschaltet wird.

5. Verfahren nach einem oder mehreren der Ansprüche 1 bis 4, dadurch gekennzeichnet, daß ein Übergang von einem höheren zu einem niedrigeren Automatenpreis in einer besonderen Weise angezeigt wird.

6. Verfahren nach einem oder mehreren der vorhergehenden Ansprüche, dadurch gekennzeichnet, daß ein automatisches Bestimmen oder Lernen von Ideal-Absatzkurven und/oder Umschalt-Bandbreiten durchführt wird.

7. Verkaufsautomat in dem eine Menge von Waren und/oder Dienstleistungen zu jeweils bestimmten Automatenpreisen angeboten werden, gekennzeichnet durch
Mittel (40) zur Bereitstellung von Absatzprognosedaten für eine Absatzerwartung;
Mittel (31) zur Erfassung aktueller Marktdaten;
Mittel (44) zur automatischen Bewertung der Marktlage basierend auf den aktuellen Marktdaten und den Absatzprognosedaten;
Mittel (45) zur Berechnung eines aktuellen Automatenpreises für mindestens eine der Waren und/oder Dienstleistungen;
Mittel (46) zur Anzeige der aktuellen Automatenpreise.

8. Verkaufsautomat nach Anspruch 7, gekennzeichnet durch Mittel zur Bereitstellung von mindestens zwei Datensätzen für die Absatzprognose;
Mittel zur Erfassung von mit mindestens einer Kenngröße korrelierenden äußeren Bedingungen; und
Mittel zum Umschalten zwischen den Datensätzen entsprechend den erfaßten Bedingungen.

9. Verkaufsautomat nach Anspruch 7 oder 8, gekennzeichnet durch Mittel zum Erfassen aktueller Absatzdaten;
Sensormittel (41) zum Erfassen von außerhalb des Automaten herrschenden Absatz-Bedingungen;
Zeitgebermittel (43) zum Erfassen der aktuellen Zeit;
Speichermittel (40) zum Bereitstellen der Umschalttabellen;
Komparatormittel (44) zum Vergleichen der aktuellen Absatzdaten mit entsprechenden Absatzdaten in den Umschalttabellen;
Generatormittel (45) zum Generieren von aktuellen Automatenpreisen unter Berücksichtigung der Ergebnisse des Vergleichs;
Anzeigemittel (46) zum Anzeigen der jeweils aktuellen Automatenpreise.

10. Verkaufsautomat nach einem oder mehreren der Ansprüche 7 bis 9, ferner gekennzeichnet durch Mittel zur besonderen Anzeige eines Überganges von einem höheren zu einem niedrigeren Automatenpreis.
